(19) **Europäisches Patentamt / European Patent Office / Office européen des brevets**

(11) **EP 4 368 285 A1**

(12) # EUROPEAN PATENT APPLICATION

(43) Date of publication:
**15.05.2024 Bulletin 2024/20**

(21) Application number: **22207344.7**

(22) Date of filing: **14.11.2022**

(51) International Patent Classification (IPC):
**B01J 20/32** (2006.01)   **B01J 20/22** (2006.01)
**B01J 20/20** (2006.01)   **B01D 69/10** (2006.01)
**B01D 69/12** (2006.01)   **B01D 61/00** (2006.01)
**B01D 53/22** (2006.01)   **B01D 71/02** (2006.01)

(52) Cooperative Patent Classification (CPC):
**B01J 20/3204; B01D 53/228; B01D 69/02;
B01D 69/12; B01D 71/021; B01D 71/028;
B01J 20/20; B01J 20/226; B01J 20/3236**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Ecole Polytechnique Fédérale de Lausanne (EPFL)**
  **1015 Lausanne (CH)**
• **The Johns Hopkins University**
  **Baltimore, MD 21218 (US)**

(72) Inventors:
• **AGRAWAL, Kumar Varoon**
  **1800 VEVEY (CH)**
• **LIU, Qi**
  **1950 SION (CH)**
• **TSAPATSIS, Michael**
  **Baltimore, 21212 (US)**
• **MIAO, Yurun**
  **Baltimore, 21210 (US)**

(74) Representative: **reuteler & cie SA**
  **Chemin de la Vuarpillière 29**
  **1260 Nyon (CH)**

(54) **METHOD OF PREPARATION OF ULTRATHIN METAL-ORGANIC FRAMEWORKS & USES THEREOF**

(57) The invention relates to methods for the preparation of ultrathin metal-organic frameworks (MOFs), in particular Zeolitic imidazolate frameworks (ZIFs) and uses thereof and resulting products thereof, in particular useful for the preparation of gas separation membranes, in particular for $H_2$ sieving.

EP 4 368 285 A1

**Description**

**Field of the Invention**

The present invention pertains generally to the field of preparation of metal-organic frameworks (MOFs), in particular Zeolitic imidazolate frameworks (ZIFs) and uses thereof.

**Background of the Invention**

MOFs are organic-inorganic structures, highly porous structures that are obtained through precisely controlled structures in which two components of metal cations as nodes and organic molecules as bridges have been engineered.

Zeolitic imidazolate frameworks (ZIFs) (Banerjee et al., 2008, Science 319, 939-943; Guillerm et al., 2014, Chem. Soc. Rev. 43, 6141-6172) are nanoporous ordered materials belonging to a class of metal-organic frameworks (MOFs) but exhibiting zeolitic topology and high chemical and thermal stability and that hold promise for applications in molecular separations (Zhou et al., 2018, Sci. Adv. 4:eaau1393; Ma et al., 2018, Science 361, 1008-1011), patterning (Stassen et al. 2013, CrystEngComm, 15, 9308-9311; Miao et al. 2022, Nat. Commun. 13, 420) and sensing (Lu et al., 2010, J. Am. Chem. Soc. 132, 7832-7833). ZIFs are constructed by linking $Zn2^+$ or $Co^{2+}$ ions with organic imidazolate (Im) linkers. As a result of their microporosity, ZIFs generally exhibit high CO2 uptake, making them suitable for $CO_2$ based gas separation and storage. The presence of organic linkers enables various strategies to fine tune pore size and aperture as well as the pore polarity of ZIFs. Despite the wide variety in unraveled ZIF structures, not many different ZIF types have been applied in MMMs for gas separation.

In particular, low-temperature synthesis and activation, high porosity, and Å-scale pore aperture of ZIF make it highly advantageous compared to other nanoporous materials especially for application in membrane-based separations. Å-scale biological channels represent the ideal design of selective layer because of their nanometer-scale pathlength (Epsztein et al., 2020, Nat. Nanotechnol. 15, 426-436).

Their chemical and physical properties have been widely explored as a function of framework flexibility (Moggach et al., 2009, Angew. Chem. Int. Ed. 48, 7087-7089; Knebel et al. 2017, Science 358, 347-351) and structural defects (Bennett et al., 2017, Nat. Chem. 9, 11-16; Babu et al., 2019, Adv. Mater. 31, 1900855).

ZIF-8 is constructed by linking 2-methylimidazolate with $Zn2^+$ metal ions and has a sodalite (SOD) topology containing a cuboctahedral structure (Park, et al., 2006, Proc. Natl. Acad. Sci. U. S. A., 103, 10186-10191). Due to this unit cell structure permeation through ZIF-8 can occur in three dimensions. Moreover, the flexibility of the 2-methylimidazolate linkers in the ZIF-8 structure make the framework dynamic, where linker rotation can increase the crystallographic size of the pore aperture from 3.4 Å to a dynamic pore aperture of 4.0-4.2 Å (Qian et al., 2020, Chem. Rev., 120, pp. 8161-8266). The range of the ZIF-8 pore aperture size lies within the spectrum of the kinetic diameters of several industrial relevant gases, such as $CO_2$ (3.3 Å), $N_2$ (3.64 Å) and $CH_4$ (3.8 Å), which can be regarded as the main motivation for the use of ZIF-8 in mixed matrix membranes (Essen et al., 2020, Separation and Purification Technology 260, 1, 118103).

Amorphous MOFs exhibit unique physical and chemical properties due to the absence of anisotropy and crystalline grains (Bennett et al., 2018, Nat. Rev. Mater. 3, 431-440). They are especially attractive for lithographic patterning because of their improved homogeneity and processability compared to their polycrystalline counterparts.

Numerous strategies for generating thin MOF coatings onto the supporting substrates had been developed (Crivello et al., 2021, Mater. Horiz. 2021,8, 168-178) which cand be categorized into two strategies: direct and indirect (Zhang et al., 2022, ACS Omega, 7 (21), 17765-17773). In the direct strategy, the MOF coating is *in situ* settled on the supporting substrates during MOF formation. In the indirect strategy, MOF coatings were obtained by launching the supporting substrate with the as-prepared free-standing MOF film, which was synthesized at the liquid-liquid or liquid-air interface (Bai et al., 2018, ACS Appl. Mater. Interfaces, 10, 25960-25966).

In spite of the variety of the proposed strategies, several obstacles remain on the way to MOFs industrial applications, for example, poor processability in hydro-/solvothermal, expensive equipments required in electrochemical deposition, time consuming in stepwise method, specific substrate designed to direct the growth of MOF crystals in epitaxial growth. Recently, a new strategy was developed in an attempt to achieve MOF coatings independent from the substrates through the treatment of substrates with polyelectrolyte multilayers of polydimethyldiallyl ammonium chloride (PDDA), and tannic acid (TA) (*Zhang et al., 2022, supra*). However, the resulting layers are quite thick (2 $\mu$m), which limits the gas permeance.

The realization of two-dimensional (2D) ZIF films with thickness down to that afforded by a single structural building unit is highly desired to make ZIF analogues to graphene and related 2D materials with an added advantage; the intrinsic nanoporosity of ZIF can be used to separate molecules while maximizing the permselective flux (Gascon et al., 2010, Angew. Chem. Int. Ed. 49, 1530-1532) and offer promising possibilities for removal of various environmental pollutants such as noxious gases, organic pollutants, heavy metals and radionuclides on ZIFs (Sun et al., 2022, Environ. Sci.: Nano, in press).

Another highly desirable feature is a nanometer-scale control over the film thickness which can allow one to fabricate nanoscale patterns. However, the realization of 2D crystalline and ultrathin amorphous ZIF films has remained elusive. While layered ZIFs such as ZIF-L (Chen et al. 2013, Chem. Commun., 49, 9500-9502), Zn2(bim)$_4$ (Peng, et al., 2014) and analogs (Science 346, 1356-1359; Peng et al., 2017, Angew. Chem. 129, 9889-9893) have been reported, the individual ZIF layers in these materials have a small aspect ratio (100) which prevents the realization of continuous 2D ZIF films over a macroscopic length scale. The state-of-the-art of ZIF deposition methods yield polycrystalline films with thickness larger than 100 nanometers (He et al., 2018; Adv. Funct. Mater., 28, 1707427; Wei et al., 2020, Adv. Funct. Mater., 30, 1907089). This is mainly due to difficulty in achieving in-plane film growth without film thickening.

Therefore, the development of new methods of fabricating MOF films (e.g. ZIF films), in particular 2D ZIF films in a precisely and controlled manner is highly attractive in view of the large-scale deployment of various possible applications for those materials that has been hampered so far by the above-described technical limitations.

**Summary of the Invention**

The present invention is based on the unexpected finding of a process that allows obtaining macroscopically uniform ultrathin amorphous MOF films, in particular two-dimensional ZIF (2DZIF) films on graphitic substrates, with thickness down to that of a single structural building unit (2 nm) with record high permselective H$_2$ flux.

A general object of this invention is to provide an efficient method of preparation of macroscopically uniform ZIF films with a nanometer-scale control over the film thickness.

One of the specific objects of this invention is to provide an efficient method of preparation of 2D ZIF films under a fully controlled growth process with a resolution of a single layer.

It is advantageous to provide a method of preparation of 2D ZIF film which allows the formation of such films with a homogeneous thickness over a large area in a time efficient manner.

It is advantageous to provide a method of preparation of ultrathin (e.g., from about 2 nm to about 20 nm) 2D ZIF films on graphitic substrates and related 2D materials for membrane applications.

It is advantageous to provide a method of preparation of ultrathin ZIF films which allows a precise precisely control of the desired film thickness and properties.

It is advantageous to provide a method of preparation of ZIF films allowing preventing homogeneous nucleation in the bulk solution and promoting heterogeneous nucleation on the substrate surface.

It is advantageous to provide a method of preparation of MOF, in particular, ZIF films at room temperature.

It is advantageous to provide a method of preparation of MOF, in particular, ZIF films presenting a high mechanical strength.

Objects of this invention have been achieved by providing a method for the preparation of a porous metal-organic framework according to claim 1.

Disclosed herein is a method for the preparation of a MOF coated substrate comprising the steps of:

> **a)** Providing a substrate;
> **b)** Providing an ultra-diluted MOF metal precursor solution, wherein said an ultra-diluted MOF metal precursor solution contains $\leq$ 2mM of metal ions and $\leq$ 16 mM organic ligand;
> **c)** immersing the said substrate in the ultra-diluted MOF metal precursor solution for about 2 to about 20 min (e.g., 2 to 15 min);
> **d)** removing the obtained MOF coated substrate from the precursor solution, wherein the MOF coated substrate comprises a MOF layer from about 2 to about 20 nm coated on said substrate.

In an advantageous embodiment, the obtained product in the form of ZIF coated graphene substrate is used for preparing a gas filter.

It is advantageous to provide a gas selective membrane combining high H$_2$ flux (typically higher than 1 mol m$^{-2}$ s$^{-1}$) and H$_2$/N$_2$ separation factor (typically higher than 20).

Objects of this invention have been achieved by providing a graphitic substrate coated with two-dimensional crystalline ZIF (2DZIF) film according to claim 11.

Objects of this invention have been achieved by providing a gas selective separation filter according to claim 12.

Objects of this invention have been achieved by providing a use of a gas selective filter according to claim 14.

Objects of this invention have been achieved by providing an amorphous substrate coated with an amorphous ZIF (aZIF) film according to claim 15.

Objects of this invention have been achieved by providing a use of an amorphous porous substrate coated with amorphous ZIF (aZIF) film according to claim 16.

Also disclosed herein is a graphitic substrate coated with a two-dimensional crystalline ZIF (2DZIF) film, wherein the said film's thickness is from about 2 nm to about 20 nm (e.g., about 2 nm) and the film's pore density from about 10

to about 60%, in particular 30% to about 60% (e.g., 50 %).

Also disclosed herein is a gas selective filter wherein the graphene membrane is made with a method according to the invention.

Also disclosed herein is a use of a gas selective filter comprising a membrane for gas separation, in particular for separating $H_2$ from $N_2$ and $CH_4$.

In an advantageous embodiment, the $H_2$ permeance of the gas filter is from about 2'000 GPU to about 20'000 GPU, namely from about $7.7 \times 10^{-7}$ to about $7.7 \times 10^{-6}$ mol m$^{-2}$ s$^{-1}$ Pa$^{-1}$ (e.g., $6 \times 10^{-6}$ mol m$^{-2}$ s$^{-1}$ Pa$^{-1}$ at 25°C under 2 bar).

In an advantageous embodiment, the $H_2/N_2$ selectivity of a gas filter according to the invention is higher than 20, in particular from 20 to about 117 (e.g., from about 25 to 70) at 25°C under 2 bar.

In an advantageous embodiment, the gas filter according to the invention according to the invention exhibits high permselective $H_2$ flux.

Also disclosed herein is an amorphous porous substrate coated with an amorphous ZIF (aZIF) film, wherein the said film's thickness is from about 8 nm to about 20 nm (e.g., about 10 nm).

In an advantageous embodiment, the obtained product in the form of a ZIF coated amorphous porous substrate is used in imprinting or lithographic patterning processes (e.g., generating a patterned MOF coating on removable substrates).

Also disclosed herein is a miniaturized catalytic, sensing, luminescent or biomedical (e.g. microfluidic or lab-on-a-chip device) device comprising an amorphous ZIF (aZIF) film according to the invention.

According to a particular aspect, the method reported here will likely accelerate the development of 2D crystalline and ultrathin amorphous MOF films for applications ranging from separation membranes to patterning.

Other features and advantages of the invention will be apparent from the claims, detailed description, and figures.

**Brief Description of the drawings**

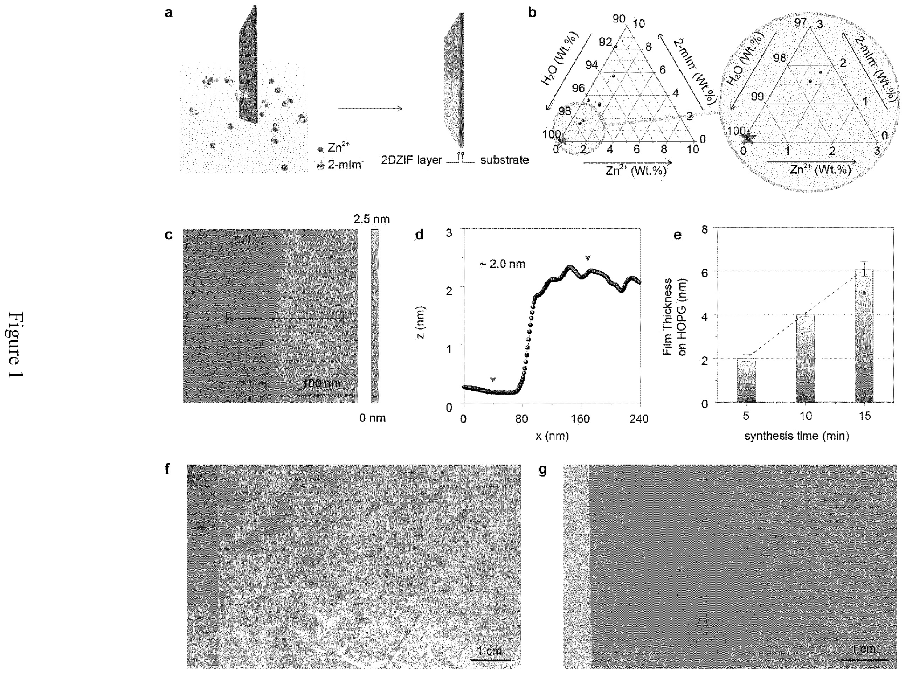

**Figure 1** illustrates the synthesis ZIF films from ultradilute solutions as described in Example 1. **a:** Schematic representation of the formation of a ZIF film on a substrate. **b:** Composition diagram comparing the precursor solution composition used in the method of the invention with those reported in the literature (as detailed in **Table 1**). AFM **(c)** and the corresponding height profile **(d)** of a monolayer ZIF film on HOPG. **e:** Monolayer and multilayer ZIF films on HOPG with discrete thicknesses as a function of synthesis time. Error bars in this figure represent the standard deviation of measurement. **f** and **g**, Optical and SEM images of 2DZIF film on graphene/Cu foil, respectively, while SEM image was created from combining $43 \times 42 = 1806$ images by scanning the whole surface of the sample.

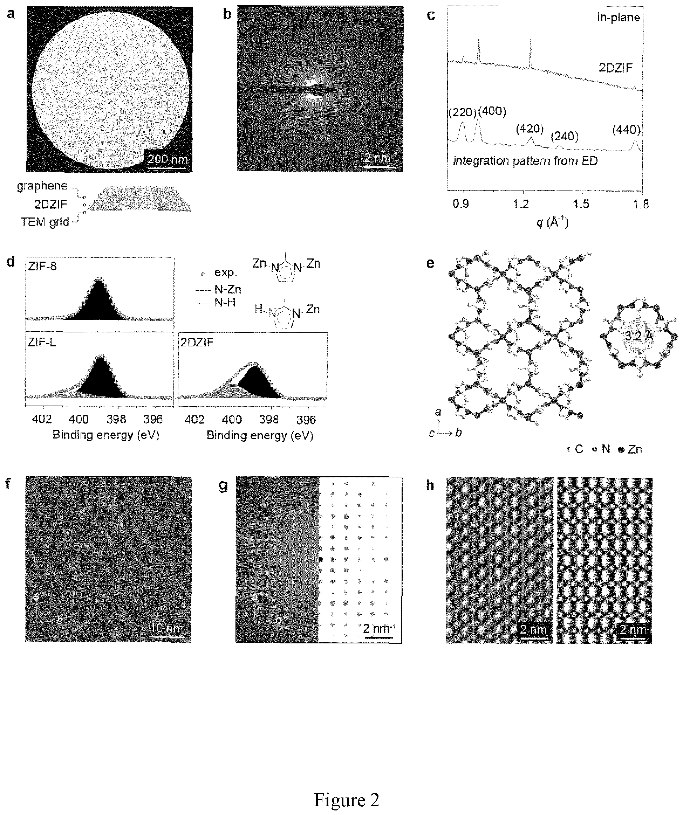

**Figure 2** presents the structure determination of 2DZIF films as described in Example 2. **a:** Bright-field TEM image of the 2DZIF film supported on suspended graphene, and **(b)** its corresponding SAED pattern. The pattern from graphene is identified with green circles and those from 2DZIF with white circles. **c:** In-plane GIXRD data from a 2DZIF film (middle) prepared on graphene/Si/SiO$_2$ along with a radially integrated trace (bottom) of the SAED pattern shown in (b). **d:** N1s XPS spectra from ZIF-8, ZIF-L (comparative, not from the invention) and 2DZIF films. The N-Zn and N-H coordination environments are shown on the right. **e:** DFT-relaxed structure of the 2DZIF and a visualization of the 6-member-ring (6-MR) and its 3.2 Å gap. **f:** HRTEM image of the 2DZIF film lying flat on the *hk0* plane, resting on suspended graphene, and **(g)** corresponding Fourier transform compared with the simulated diffraction pattern from the proposed structure oriented along the *c*-out-of-plane direction. **h:** Left: CTF-corrected image of the highlighted area in **(f)** based on a defocus value of -130 nm analysed from the Thon rings in the Fourier transform pattern. Right: simulated projected potential map along the [001] direction of 2DZIF.

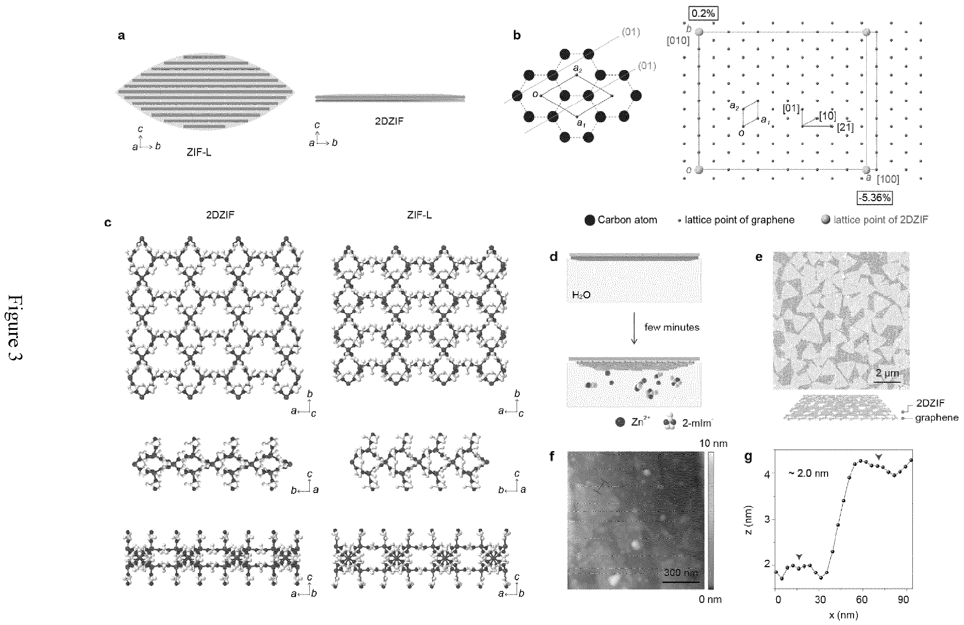

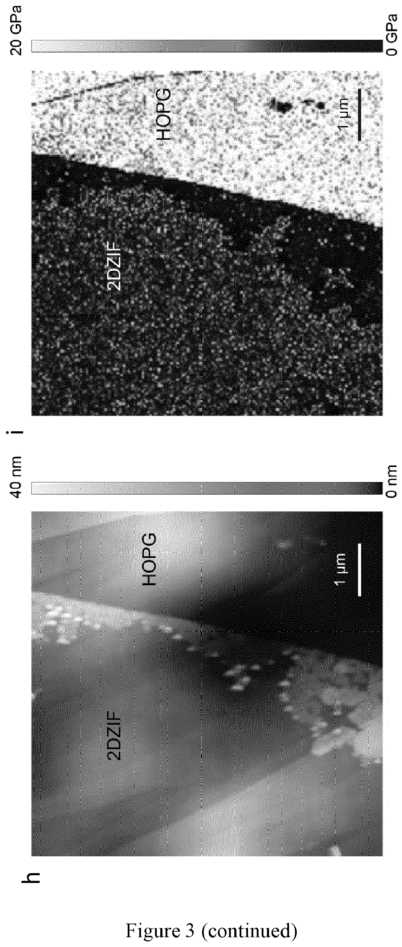

**Figure 3** presents the characterization of the 2DZIF structure as described in Example 2 and its relationship with comparative ZIF-L. **a:** Schematic contrasting the arrangement of layers within a ZIF-L crystal with that of a monolayer 2DZIF according to the invention. **b:** Epitaxial relationship between the graphene lattice and 2DZIF. **c:** Structures of a 2DZIF layer according to the invention (left) and ZIF-L (right) viewed along the [001], [100], and [010] directions. **d:** Schematic illustration of the etching of 2DZIF in water. SEM **(e)** and AFM **(f)** images of the triangular grains of 2DZIF obtained by a short etching in water. **g:** AFM height profile corresponding to the line in **(f)**; AFM image **(h)** and corresponding modulus map **(i)** of 2DZIF synthesized on HOPG.

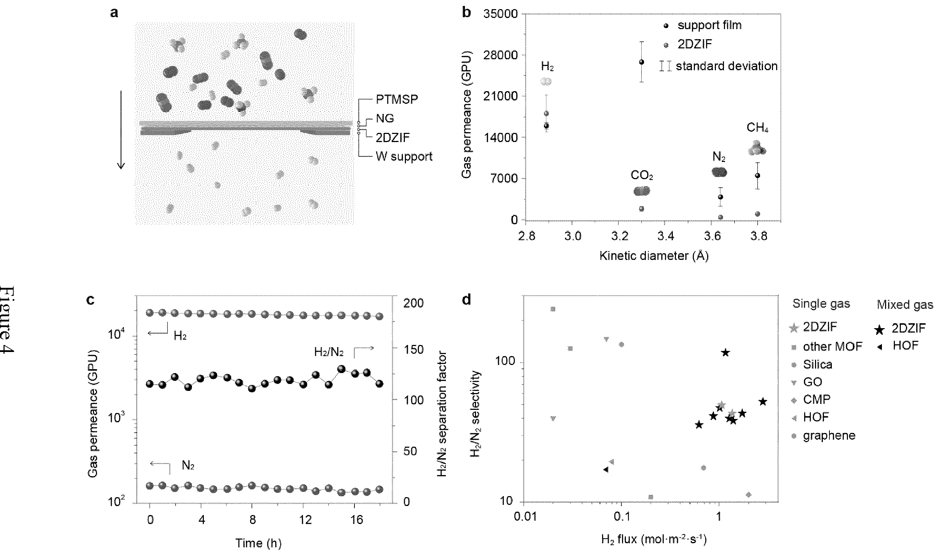

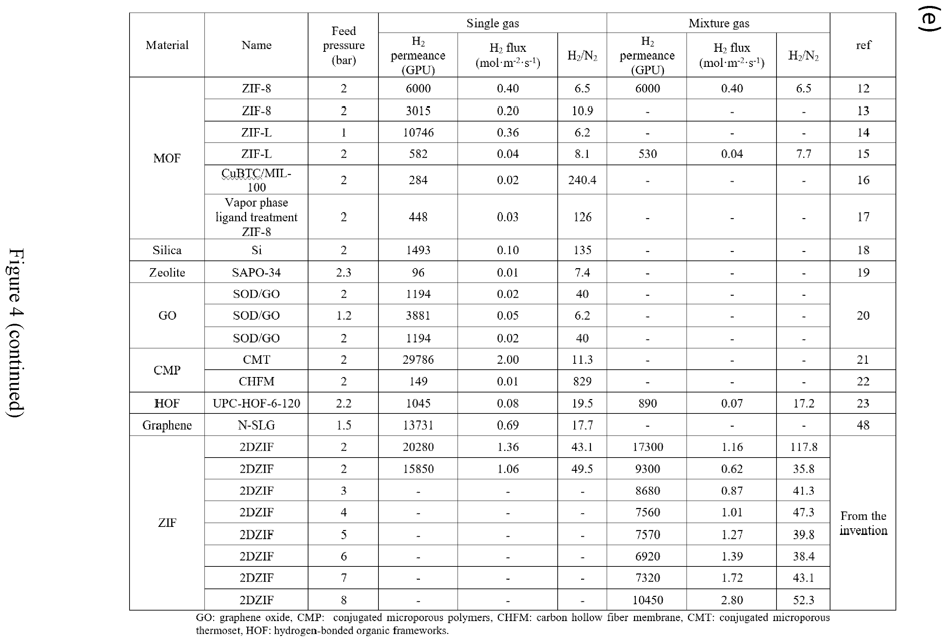

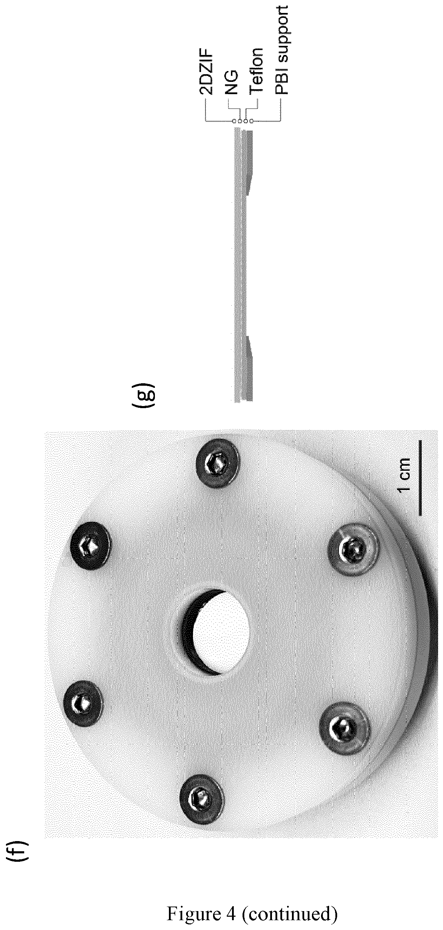

**Figure 4** represents possible applications of 2DZIF obtained by a method of the invention. **a:** Schematic of a 2DZIF film supported on nanoporous graphene (NG) reinforced with PTMSP. **b:** $H_2$, $CO_2$, $N_2$ and $CH_4$ permeances of the PTMSP/NG support and the supported 2DZIF film on PTMSP/NG. **c:** 2DZIF membrane separation performance for an equimolar $H_2/N_2$ mixed feed. **d:** Comparison of the $H_2/N_2$ separation performance of 2DZIF membranes with the state-of-the-art membranes (**as detailed in Fig. 4e**). GO, CMP, and HOF refer to graphene oxide, conjugated microporous polymers and hydrogen-bonded organic frameworks, respectively. **e:** Gas permeance and ideal selectivity of a film of the invention compared to the state of the art in the literature; **f:** Optical photo of 1 cm scale 2DZIF membrane in module and **(g)** its schematic structure.

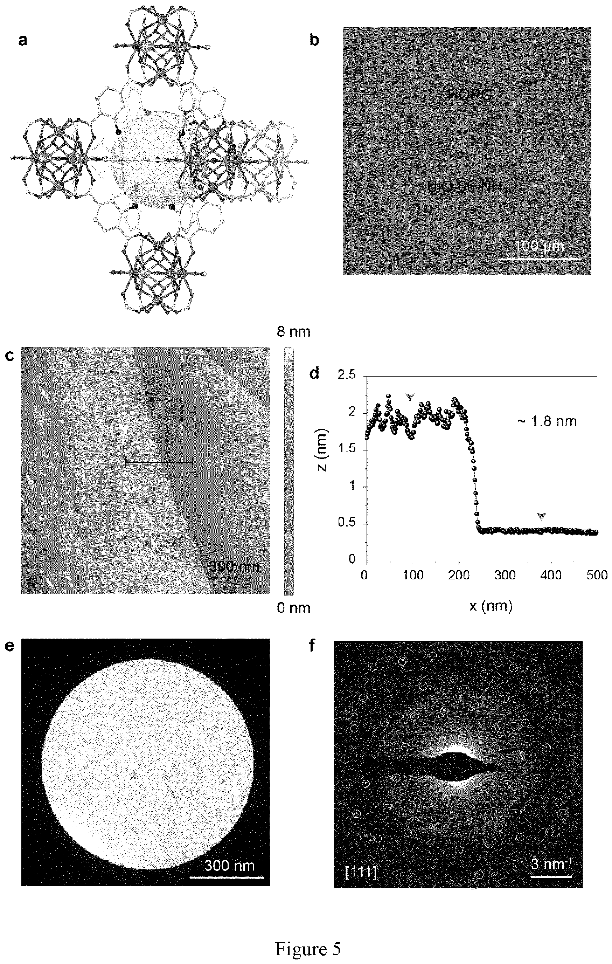

**Figure 5** presents the synthesis MOF films from ultradilute solutions according to a method of the invention as described in Example 4. **a:** Structure of the metal-organic framework UiO-66-NH2; **b:** SEM image of UiO-66-NH$_2$ film synthesized on HOPG; c: AFM image and corresponding height profile for UiO-66-NH$_2$ film synthesized on HOPG. **(e)** and **(f)** Bright-field TEM image of the UiO-66-NH$_2$ film supported on suspended graphene and its corresponding SAED pattern, where grey and white circles are presenting diffraction from graphene and UiO-66-NH$_2$, respectively.

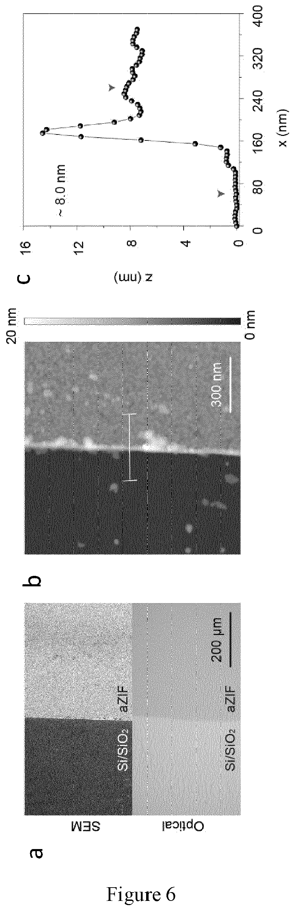

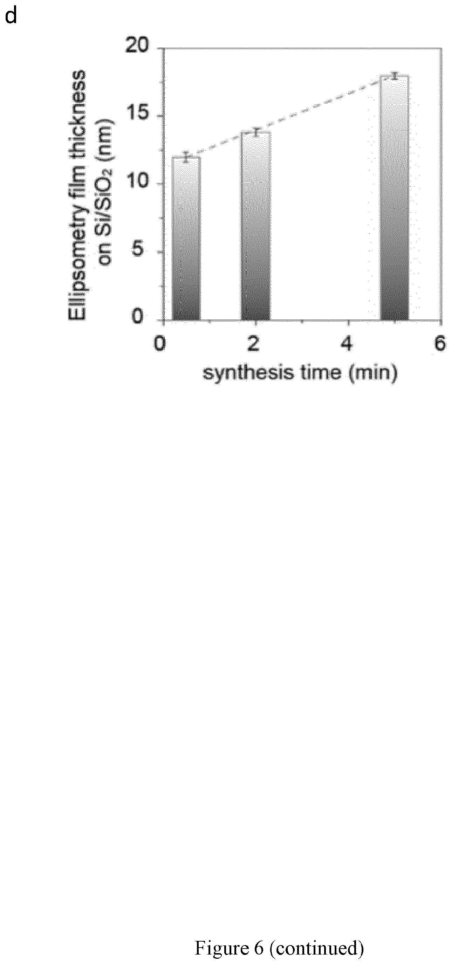

**Figure 6** illustrates the synthesis ZIF films on Si/SiO$_2$ as described in Examples 5 and 6 from ultradilute solutions. **a:** SEM and optical images of a ZIF film on Si/SiO$_2$. **b:** AFM and the corresponding height profile **(c)** of the ZIF film on Si/SiO$_2$; **d:** Ellipsometry of several ZIF films on Si/SiO$_2$ wafer.

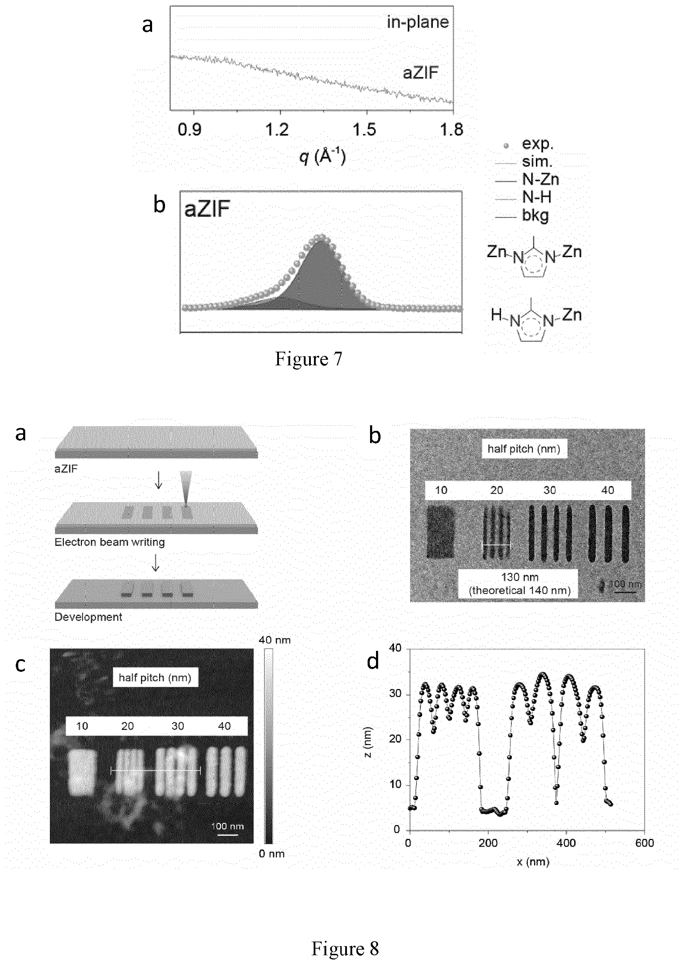

**Figure 7** presents the structure determination of aZIF films as described in Example 6. **a:** In-plane GIXRD data from an aZIF film prepared on Si/SiO$_2$ **b):** N1s XPS spectra from aZIF. The N-Zn and N-H coordination environments are shown on the right.

**Figure 8** represents possible applications of aZIF obtained by a method of the invention. **a:** Schematic of the patterning process. TEM **(b)** and AFM **(c)** images of nanoscale patterns made on an aZIF film. **d:** AFM height profile corresponding to the line in **(c).**

## Detailed description of embodiments of the invention

The expression "MOF" or "Metal organic framework" refers to uniform structured porous materials fabricated by linking inorganic and organic units by strong bonds (reticular synthesis) which consist in of metal ions or clusters coordinated to organic ligands to form one-, two-, or three-dimensional structures. The organic ligands included are sometimes referred to as "struts" or "linkers". The choice of metal and linker dictates the structure and hence properties of the MOF. For example, the metal's coordination preference influences the size and shape of pores by dictating how many ligands can bind to the metal and in which orientation. To describe and organize the structures of MOFs, a system of nomenclature has been developed and subunits of a MOF, called secondary building units (SBU), can be described by topologies common to several structures. Each topology, also called a net, is assigned a symbol *(Seidi et al., 2020, Materials (Basel).13(12): 2881; Furukawa et al., 2013, Science 341:1230444).* For example, a Zr-MOF, UiO-66 is a «coordination polymer». The monomers, AKA "building blocks", are bdc and Zr$_6$O$_4$ (OH)$_4$ clusters. UiO-66 is the progenitor of a family of zirconium-based MOFs: the same Zr$_6$O$_4$ (OH)$_4$ clusters found in UiO-66 serve as SBUs for a whole class of materials displaying a wide range of topologies, accessible by employing linkers having specific geometrical and symmetrical features. For example, Zeolitic imidazolate frameworks (ZIFs) is a subclass of MOFs, formed in zeolite topologies with metal ions and imidazolate ligands and ZIF-8 is a Zn-Based MOF. Another example is UiO-66, a zirconium(IV)-based MOF, has an exceptional chemical and thermal stability attributing to a high coordination number (12) of the [Zr$_6$($\mu_3$-O)$_4$($\mu_3$-OH)$_4$] core with bidentate benzene-1,4-dicarboxylic acid (BDC) ligand.

The expression "2D substrate" refers to a 2D material, including graphitic substrates and hexagonal boron nitride (*h*BN) and the like.

The expression "graphitic substrate" includes highly-oriented pyrolytic graphite (HOPG) or graphene or porous graphene substrates.

HOPG is a highly pure and ordered form of synthetic graphite characterized by a low mosaic spread angle, meaning that the individual graphite crystallites are well aligned with each other. The best HOPG samples have mosaic spreads of less than 1 degree.

The expression "amorphous substrate" refers to any material without crystallographic registery at its surface. It includes Si/SiO$_2$ wafers, SiN, glass, ceramic and the like.

The expression "MOF metal precursor solution" comprises metal ions such as Zn2$^+$ or Co$^{2+}$ or Zr$^{+4}$, an organic ligand such as 2-methylimidazole or imidazole, or benzimidazole or 2-ethylimidazole or purine or benzene-1,4-dicarboxylic acid, and a solvent such as water. The choice of the metal ion and organic ligand depends on the nature of the MOF to be obtained and can be easily selected in the literature *(Seidi et al., 2020, Materials (Basel). 13(12): 2881).*

Referring to the figures, in particular first to **Fig. 1a**, is provided an illustration of a method of preparation of a MOF coated on a substrate according to an embodiment of the invention. The illustrated method generally comprises the steps of:

**a)** Providing a 2D substrate;
**b)** providing an ultra-dilute MOF metal precursor solution, wherein said an ultra-diluted MOF metal precursor solution contains ≤ 2mM of metal ions and ≤ 16 mM organic ligand;
**c)** immersing the said substrate in the said ultra-diluted MOF metal precursor solution for about 2 to about 20 min;
**d)** removing the obtained MOF coated 2D substrate from the precursor solution, wherein the MOF coated 2D substrate comprises a MOF layer from about 2 to about 20 nm coated on said 2D substrate.

According to a particular aspect, the 2D substrate is a porous 2D substrate with a porosity from about 0.1 to about 30% and a thickness from about 0.3 to about 1 nm.

According to a particular aspect, the 2D substrate is a porous 2D substrate with pore size from about 0.3 to about 5 nm.

According to a particular aspect, the 2D substrate is a 2D porous graphite substrate with a porosity about 5 to about 20% (e.g., from about 10 to about 18 %) and thickness of about 0.3 to about 1.0 nm (e.g., 0.3 nm).

According to another particular aspect, the 2D porous substrate is a HOPG substrate, for example with a thickness about 1 mm.

According to another particular aspect, the 2D porous substrate is a 2D porous graphite substrate mechanically reinforced with a porous polymeric film (e.g., PTMSP or Teflon AF layer of about 50 to 1000 nm) or nanoporous carbon film with thickness of 100 to 1000 nm.

According to a particular aspect, the porous metal-organic framework is a ZIF, in particular a Zn-based MOF.

According to another particular aspect, the porous metal-organic framework is a Zr-MOF, in particular UiO-66.

According to another particular aspect, the metal-organic framework is a ZIF and the ultra-diluted MOF metal precursor solution contains $\leq$ 2 mM of $Zn^{2+}$ and $\leq$ 16 mM 2-methylimidazole (2mIm).

According to another particular aspect, the ultra-diluted MOF metal precursor solution contains from about 0.5 to about 2 mM of $Zn^{2+}$ (e.g., from about 1 to about 2 mM of $Zn^{2+}$).

According to another particular aspect, the ultra-diluted MOF metal precursor solution contains from about 4 to about 16 mM 2-methylimidazole (e.g., from about 8 to about 16 mM 2-methylimidazole).

According to a particular aspect, the porous substrate is immersed in the ultra-diluted MOF metal precursor solution from 1 to about 10 minutes (e.g., about 2 to about 5 minutes).

According to a particular aspect, a method according to the invention allows the preparation of a MOF, in particular a ZIF film under epitaxial condition, i.e. where the deposited film takes on a lattice structure and orientation identical to those of the substrate.

According to a particular aspect, the resulting 2D ZIF coated porous graphene substrate is used for preparing a gas filter.

According to a particular aspect, is provided a graphitic substrate coated with two-dimensional crystalline ZIF (2DZIF) film, wherein the said film's thickness is from about 2 to about 20 nm (e.g., from about 2 to about 18 nm, such as from about 2 to about 10 nm) and the film's pore density from about 30 to about 60% (e.g., 50 %).

According to a particular aspect, is provided a graphitic substrate coated with two-dimensional crystalline ZIF (2DZIF) film according to the invention, wherein the size of the pores of the ZIF film is from about 0.25 to about 1 nm, preferably from about 0.3 to about 0.4 nm.

According to a particular aspect, is provided a graphitic substrate coated with two-dimensional crystalline ZIF (2DZIF) film, wherein the crystalline structure comprises a pore aperture made of a six-membered zinc-imidazolate coordination ring with an effective van der Waals gap of about 3.2 Å estimated by a crystallography software (Diamond).

According to a particular aspect, is provided a gas selective filter wherein the graphene membrane is prepared with a method according to the invention.

According to a particular aspect, is provided a gas selective filter comprising a porous graphitic substrate coated with two-dimensional ZIF (2DZIF) film according to the invention.

Also disclosed herein is gas selective filter selecting $H_2$ from $N_2$ comprising an assembly of graphene membranes according to the invention.

Also disclosed herein is a use of a gas selective filter comprising a membrane for gas separation, in particular for separating $H_2$ from $N_2$.

In an advantageous embodiment, the $H_2$ permeance of the gas filter is from about 15'000 GPU to about 20'000 GPU, namely from about $50.2 \times 10^{-7}$ to about $7.7 \times 10^{-6}$ mol m$^{-2}$ s$^{-1}$ Pa$^{-1}$ (e.g., $6 \times 10^{-6}$ mol m$^{-2}$ s$^{-1}$ Pa$^{-1}$) at 25°C under 2 bar.

In an advantageous embodiment, the $H_2/N_2$ selectivity of a gas filter according to the invention is from about 50 to about 70 at 25°C.

According to another aspect, is provided an illustration of a method of preparation of a MOF coated on a substrate according to an embodiment of the invention. The illustrated method generally comprises the steps of:

**a)** Providing an amorphous substrate;
**b)** providing an ultra-diluted MOF metal precursor solution, wherein said an ultra-diluted MOF metal precursor solution contains $\leq$ 2mM of metal ions and $\leq$ 16 mM organic ligand;
**c)** immersing the said substrate in the said ultra-diluted MOF metal precursor solution for about 2 to about 20 min;
**d)** removing the obtained amorphous MOF coated substrate, wherein the amorphous MOF coated substrate comprises a MOF layer from about 2 to about 20 nm coated on said amorphous substrate.

According to a particular aspect, the amorphous substrate is a Si/SiO$_2$ wafer.

Also disclosed herein is an amorphous substrate coated with an amorphous ZIF (aZIF) film, wherein the said film's thickness is from about 8 nm to about 20 nm (e.g., about 10 to 19 nm).

In an advantageous embodiment, the obtained product in the form of a ZIF coated amorphous porous substrate is used in imprinting or lithographic patterning processes (e.g., generating a patterned MOF coating on removable substrates). Patterned MOF can be used in microelectronics, electrochemical devices and in sensors.

Also disclosed herein is a miniaturized catalytic, sensing, luminescent or biomedical (e.g. microfluidic or lab-on-a-chip device) device comprising an amorphous ZIF (aZIF) film according to the invention.

According to a particular aspect, the method reported here will likely accelerate the development of 2D crystalline and ultrathin amorphous MOF films for applications ranging from separation membranes to patterning.

Without willing being bound by any theory, it has been found that the film crystallinity is determined by the interaction of molecular precursors with the substrate ranging from epitaxy-determined order to amorphous films in the absence of any crystallographic registry.

As can be seen on **Fig. 3b,** only when the lattice mismatch between MOF and the substrate is small, the resulting MOF film is crystalline. For amorphous substrates, the obtained MOF structures are random.

According to another particular embodiment, is provided a gas selective filter comprising a 2D ZIF coated graphene membrane having a thickness of 2 to 10 nm wherein the size of the pores of the ZIF film is in the range of 0.25-1 nm, preferably 0.3-0.4 nm.

According to another particular aspect, a method and of the invention further advantageously provides useful starting materials for the preparation of membranes suitable for separation H$_2$ from N$_2$ where a H$_2$ permeance reaching 20'000 gas permeation units with H$_2$/N$_2$ selectivity reaching 52, at 25°C.

The invention having been described, the following examples are presented by way of illustration, and not limitation.

## EXAMPLES

Zinc nitrate hexahydrate (Zn(NO$_3$)$_2$·6H$_2$O) was purchased from Sigma-Aldrich. 2-methylimidazole (2-mIm) was from Chemie Brunschwig AG. HCl (32 wt%) was purchased from Reactolab S.A.. poly[1-(trimethylsilyl)-1-propyne] (PTMSP) was from ABCR. FeCl$_3$ (97%) and Na$_2$S$_2$O$_8$ was bought from Sigma-Aldrich. Cu foil (50 mm, 99.9%) were purchased from STREM. Toluene (AR) and methanol (AR) were from Fischer. All chemicals were used without further purifications. Si/SiO$_2$ wafers were purchased from University Wafer Inc. Si/SiO$_2$ wafer with single layer graphene was bought from Ted Pella. Highly oriented pyrolytic graphite (HOPG) (ZYA quality, GRAS/1.0×7×7) was purchased from ScanSens. Silicon nitride TEM supports (50 nm silicon nitride film on a 200 $\mu$m silicon frame with nine viewing windows, each 0.1 × 0.1 mm) were purchased from Ted Pella.

**Example 1: Method of preparation of ZIF films according to the invention on 2D substrates**

Various substrates 2D porous graphite substrates were used as substrates in a method according to the invention.

**a) Providing a 2D substrate**

A 2D graphite substrate such as highly-oriented pyrolytic graphite (HOPG) or graphene/Si/SiO$_2$ is provided.

The 2D graphite substrate was prepared depending on the envisioned applications. Examples are provided below.

*2D porous graphite substrate for the preparation of 2DZIF membrane for gas separation*

A single-layer graphene (SLG) was synthesized by using low-pressure CVD of methane on copper foil following the literature for example as described in Huang et al., 2021, Sci. Adv. 7:eabf0116. Before the synthesis, the copper foil was annealed at 1077°C in a H$_2$/Ar atmosphere for 60 min. Then, CO$_2$ (100 mL/min) and H$_2$ (8 mL/min) flow was introduced successively, each for 30 min, to remove the contaminations. At last, CH$_4$ (24 mL/min) and H$_2$ (8 mL/min) flow was used to grow single-layer graphene on copper film for 30 min at pressure of 460 mTorr.

After the synthesis of single-layer graphene, an O$_2$ plasma cleaner, EQ-PCE-3, 13.56 Mhz, 17 W) was carried out to introduce nanopores. Briefly, the atmosphere in the plasma chamber was exchanged by O$_2$ flow to pressure around 50 mTorr. Then, a plasma was generated for 4 s to etch SLG to get nanoporous graphene (NG). After the plasma treatment, a solution of Poly(1-trimethylsilyl-1-propyne) (PTMSP) in toluene (1.25 wt%) was spin-coated on NG at 1000 rpm for 30 s and 2000 rpm for 30 s, respectively. After that, the sample was placed in ambient air at room temperature overnight. Then, copper foil was etched by a combination of $FeCl_3$ (0.5 M in water), HCl (0.1 M in water) and water. Then, the obtained graphene/PTMSP film is used as a substrate in step b).

For the synthesis of 1 cm scale 2DZIF membrane, 1 wt% of Teflon in GALDEN perfluorinated fluid was spin-coated on NG at 300 rpm for 60 s, and heated at 60°C for 3 h. After that, the sample was put into a membrane module for the gas separation test, while Cu foil facing up. This allowed etching of Cu by a 10 wt% $Na_2S_2O_8$ aqueous solution. Then, the obtained graphene/teflon film is used as a 2D substrate in step b).

**b) Immersing the 2D substrate in a precursor an ultradilute precursor solution**

The 2D substrate was then immersed in an ultradilute precursor solution ($\leq$ 2 mM $Zn^{+2}$ and $\leq$ 16 mM 2-methylimidazole (2-mIm), respectively) for a few minutes (**Fig. 1a**). First, in a petri dish containing 29 ml of $Zn(NO_3)_2$ aqueous solution at room temperature the 2D graphite substrate was partially immersed. Then, 1 ml of 2-mIm aqueous solution was added. After an incubation time of few minutes, the substrate was removed to stop the reaction.

The obtained ZIF films on graphitic substrates are referred to as 2DZIF. The use of such ultradilute solutions for the growth of ZIF films has not been reported before **(Fig. 1b)** and as compared under **Table 1** below:

**Table 1**

| ZIFs | Zn $(NO_3)_2$ (Wt. %) | 2-mIm (Wt. %) | $H_2O$ (Wt.%) | Reaction temperature | Reaction Time | Reference |
|---|---|---|---|---|---|---|
| Comparative ZIF-L | 1.42 | 3.13 | 95.45 | RT | 4 h | Wang et al., 2020, ACS Appl. Nano Mater. 3, 3839-3846 |
| Comparative ZIF-L | 0.72 | 1.59 | 97.69 | RT | 4 h | Kim et al., 2018, J. Membr. Sci. 549, 260-266 |
| Comparative ZIF-L | 0.065 | 8.21 | 91.725 | RT | 14 h | Zhang et al., 2018, New J. Chem. 42, 6719-6726 |
| Comparative ZIF-L | 0.36 | 3.56 | 96.08 | RT | 4 h | Wang et al., 2019, CrystEngComm 21, 6536-6544 |
| Comparative ZIF-L | 1.38 | 3.26 | 95.36 | RT | 1 h | Han et al., 2020, J. Mater. Chem., 8, 25028-25034 |
| Comparative ZIF-L | 0.72 | 1.59 | 97.69 | RT | 4 h | Zhu et al., 2019, RSC Adv., 9, 23390-23399 |
| Comparative ZIF-L | 0.83 | 1.82 | 97.35 | 30 °C | 1 h | Yuan et al., 2019, Adv. Mater. 31, 1807161 |
| Comparative ZIF-L | 1.26 | 5.56 | 93.18 | RT | 30 min | Pan et al., 2011, Chem. Commun. 47, 2071-2073 |
| 2DZIF | 0.059 | 0.13 | 99.811 | RT | $\leq$15 min | From the invention |

*2DZIF membranes for gas separation*

When a graphene/PTMSP film was used as a 2D substrate, a 2-min reaction in $Zn(NO_3)_2$, 2 mM and 2-mIm, 16 mM aqueous solution was used, and the resulting 2DZIF/graphene/PTMSP film was transferred to a macroporous substrate (e.g. macroporous W support with 1-mm$^2$-size testing area) for further characterizations or applications.

When a Teflon supported NG substrate was used as 2D substrate, a 10 min reaction time in ($Zn(NO_3)_2$, 2 mM and 2-mIm, 16 mM) solution was carried out.

When HOPG was used as a substrate, a growth solution of 1 mM $Zn^{2+}$ and 8 mM 2-mIm and reaction time of about 5 min was used.

**Example 2: Characterization of the ZIF films on 2D substrates**

The ZIF films obtained by a method according to the invention were further characterized by various techniques as follows.

ZIF films prepared on HOPG prepared as described above were examined by optical and scanning electron microscopy (SEM). A sharp change in contrast was observed at the air/precursor-solution interface beyond which the film had a uniform contrast indicating that the film was smooth, continuous, and macroscopically uniform (**Fig. 1f and 1g**). Atomic force microscopy (AFM) imaging near the interface confirmed that the ZIF film is indeed continuous and has a thickness of ca. 2 nm (**Fig. 1c and d**). 4 and 6 nm thick films were obtained by increasing the growth time from 5 min to 10 and 15 min, respectively (**Fig. 1e**). A discrete, 2 nm, increase in film thickness suggests a crystalline order. A fitting of film thickness with the number of probable layers using the method described below yielded a monolayer thickness of 2 nm. Macroscopic films could be obtained on polycrystalline graphene synthesized by chemical vapor deposition on a Cu foil (**Fig. 1f and 1g**). Scanning electron microscope (SEM) measurements were performed on a Teneo Scanning Electron Microscope operating at 1 kV. Powder X-ray diffraction (PXRD) data were collected at a Bruker D8 Discover diffractometer with a Lynxeye XE detector, operated at 40 kV, 400 mA for Cu K$\alpha$ ($\lambda$ = 1.5406 Å) at ambient temperature and pressure. Bright-field transmission electron microscopy (TEM) images and selected-area electron diffraction (SAED) images were obtained with a Talos F200X microscope operated at 200 kV. TEM images for patterns on silicon nitride were obtained on a ThermoFisher TF30 TEM operating at 300 kV.

Low-dose aberration corrected high resolution TEM (AC-HRTEM) was performed on a Cs-corrected FEI G2 Titan 60-300 electron microscope at 300 kV, using a Gatan K2 direct-detection camera in electron counting mode. The AC-HRTEM images were acquired with the dose fractionation function, and each image stack is composed of 120 frames with 0.05 s exposure for each frame, with a total electron dose of ~60 e$^-$Å$^{-2}$. The raw image was denoised by using an average background subtraction filter (ABSF). The CTF correction was performed based on the defocus value determined from the amorphous thon rings in the Fourier transform, and the projected electrostatic potential was simulated by the QSTEM software (QSTEM V2, 31). Simulated ED pattern was carried out by using Singlecrystal module of CrystalMaker software.

AFM images and modulus measurement were recorded on a Bruker MultiMode 8 AFM. For modulus measurement, a Bruker Tap525A rectangular probe was used and calibrated with standard sample sapphire, polystyrene and HOPG. XPS were carried out on an Axis Supra (Kratos Analytical) using the monochromated K x-ray line of an aluminium anode. Synchrotron GIXRD was carried out at beamline BM01, Swiss-Norwegian beamline (SNBL) at the European Synchrotron Radiation Facility (ESRF) with wavelength of 0.683 Å.

*Sample preparation of 2DZIF on graphene for atomic force microscopy (AFM)*

For the AFM sample preparation of 2DZIF film on graphene/PTMSP substrate, the 2DZIF/graphene/PTMSP film was transferred on Si/SiO$_2$ wafer with 2DZIF layer facing the wafer. Then, the sample was annealed at 70°C for 4 h, to increase the adhesion between film and Si/SiO$_2$ wafer. After that, the sample was immersed in toluene for 12 h, to remove PTMSP layer.

The AFM image of 2DZIF film with triangular morphology after 5 min of water etching was collected directly on the film with 2DZIF layer facing up. Specifically, the 2DZIF/graphene/PTMSP film with triangular morphology was first scooped by glass slide with 2DZIF layer facing the slide, and a Si/SiO$_2$ wafer attached with double-sided carbon tape was pressed onto PTMSP layer. As a result, the 2DZIF/graphene/PTMSP film was transferred onto Si/SiO$_2$ wafer, resulting in 2DZIF layer facing up. AFM measurement of was carried out directly on the sample without any treatment.

*Sample preparation for transmission electron microscopy (TEM)*

Similar to sample preparation for AFM, 2DZIF/graphene/PTMSP film was transferred on TEM grid with 2DZIF layer facing the TEM grid. Then, the sample was annealed at 70°C for 4 h, to increase the adhesion between film and TEM grid. After that, the sample was immersed in toluene for 12 h, to remove the PTMSP layer.

*Structural simulation*

The simulation of 2DZIF structure was carried out by Density functional theory (DFT) calculations. At first, the reported ZIF-L structure *(Chen et al. 2013, Chem. Commun., 49, 9500-9502)* was imported into Forcite module in Material Studio software (Accelrys, San Diego, CA) to calculate the initial structural model, and unit-cell was set to be orthorhombic and *a* = 24.0 Å*, b* = 20.0 Å, c = 20.0 Å, $\alpha$ = 90°, $\beta$ = 90°, $\gamma$ = 90°, respectively, while the connectivity was kept. The calculation task was geometry optimization. The quality was set to be fine, and 'smart' algorithm was selected. After that, van der Waals DFT calculations were performed using the Quantum ESPRESSO package (Giannozzi et al., 2009, J. Phys. Condens. Matter, 21, 390052*; Giannozzi et al., 2017, J. Phys. Condens. Matter, 29, 465901).

The Brillouin zone was sampled at the gamma point. An energy cutoff of 60 Ry was used for the plane wave expansion of the wavefunctions. A kinetic energy cutoff of 480 Ry on the charge was used together with ultra-soft pseudopotentials (Lejaeghere et al., 2016, Science 351, 6280*; Prandini, et al., 2018, Comput. Mater. 4, 72). The relaxation was performed with the Perdew-Burke-Ernzerhof (PBE) functional (Perdew et al., 1996, Phys. Rev. Lett. 77, 3865-3868). The system was relaxed to the lowest energy configuration of atoms. The surface geometry had been optimized with the convergence thresholds of $1 \times 10^{-4}$ Ry and $3.28 \times 10^{-3}$ Ry/Bohr for the total energy and forces, respectively.

Graphene supported ZIF film obtained by a method of the invention could be suspended on a holey transmission electron microscopy (TEM) grid (Fig. 2a) and it appeared that the film was devoid of large crystals and appeared uniform. Selected area electron diffraction (SAED) from a micrometer-sized area yielded three sets of diffraction patterns (Fig. 2b). The first two sets ((01), highlighted with grey circles) had six-fold symmetry originating from two slightly misoriented (by 3.0°) grains of graphene, while the last set had two-fold symmetry and belonged to a single grain of ZIF (highlighted with white circles), confirming that ZIF prepared on graphene was crystalline. The fact that a single 2DZIF grain could grow over two slightly misoriented graphene grains indicates that epitaxial growth can accommodate small lattice mismatch. Diffraction pattern from 2DZIF, typically representing a single grain, was observed from every single spot over a large area. Based on the diffraction pattern, a and b lattice parameters of 2.4 and 2.0 nm, respectively, could be fitted. Synchrotron grazing incidence X-ray diffraction (GIXRD) was carried out of a 10-nm-thick ZIF film on graphene resting on a Si/SiO$_2$ wafer prepared as described above. The in-plane GIXRD pattern revealed sharp diffraction peaks, consistent with the peak positions obtained by the radial integration of the SAED pattern (Fig. 2c) confirming that the film formed on the graphitic substrate exhibits crystalline order. The sharpness of the GIXRD peak (FWHM of 0.035°) indicates that the grains were at least 0.1-0.2 $\mu$m in size.

The presence of the order in the ZIF film when prepared over a graphitic substrate indicates a strong role of epitaxy in the formation of the ordered 2DZIF films.

X-ray photoelectron spectroscopy (XPS) of the 2DZIF and aZIF films was carried out to gain further insights into their coordination environments (Fig. 2d). The N1s XPS data of 2DZIF when compared to that of ZIF-L layers (comparative) and a prototypical nonlayered ZIF (ZIF-8) revealed that both 2DZIF and ZIF-L yield two peaks (399.0 and 400.2 eV corresponding to N-Zn and N-H bonds, respectively) in contrast to a single peak (399.0 eV) from the ZIF-8 crystals. This is consistent with the presence of abundant surface terminations (N-H) in the 2DZIF layers. In comparison, the population of N-H species was significantly diminished for aZIF indicating a nonlayered amorphous structure.

To gain insight into the structure of 2DZIF, structural relaxation based on density functional theory (DFT) was carried out starting with the a and b lattice parameters obtained by SAED and layer thickness from AFM. The relaxed structure has an orthorhombic space group Cmce with the following structural parameters; a = 24.196 Å, b = 19.719 Å, c = 20.908 Å, $\alpha$ = 90°, $\beta$ = 90°, and $\gamma$ = 90°. The layer in 2DZIF is composed of alternating 4-member ring (MR) and 6-MR chains while terminal 2-mIm linkers are present on both sides of the layer (Fig. 2e and 3c). The pore aperture of 2DZIF is constituted by the 6-MR and corresponds to a gap of 3.2 Å. This value is in between that of ZIF-L (3.0 Å) and ZIF-8 (3.4 Å).

Aberration-corrected high-resolution TEM (AC-HRTEM) imaging of the 2DZIF film suspended on a TEM grid was carried out along the [001] crystallographic direction (Fig. 2f). The imaging was carried out using a low-dose beam condition (Zhu et al., 2017, Nat. Mater. 16, 532-536) to minimize damages to the beam sensitive 2DZIF lattice. Indeed, the obtained HRTEM image revealed the high crystallinity of the 2DZIF film. The corresponding Fourier transform validated the c-out-of-plane orientation of the film and was consistent with the simulated electron diffraction pattern from a film lying flat along the same orientation (Fig. 2g). Projection along the c-out-of-plane axis from the contrast transfer function (CTF) corrected image revealed alternating chains of 4-MR and 6-MR (Fig. 2h, left), consistent with the simulated [0001]-projected electrostatic potential map of 2DZIF structure obtained by density functional theory (DFT) structural relaxation (Fig. 2h, right).

The epitaxial relationship of 2DZIF with the graphitic lattice plays an important role in determining its unique 2D structure and morphology especially when contrasted against the closely related material, ZIF-L. Fig. 3a highlights the morphological differences in ZIF-L and 2DZIF. While the layers in ZIF-L and 2DZIF are stacked along the c-axis, the former grows as a leaf-shaped layered crystal whereas the latter can form macroscopically uniform monolayer films. The unique leaf shape is formed because ZIF-L layers stack with first progressively increasing and then progressively decreasing lateral size along the b-axis. In contrast, the planar morphology of 2DZIF is determined by its epitaxial relationship with the graphitic lattice with near perfect registry along the b-direction (lattice mismatch of 0.2%) and a mismatch along the a-direction (5.36%, Fig. 3b. This allows unimpeded grain growth of 2DZIF on the graphitic lattice. While both ZIF-L and 2DZIF have orthorhombic lattices, the unit-cell parameters of 2DZIF are distinct from those of ZIF-L where the latter has a significantly shorter parameter along the b (17.060 Å) axis (Fig. 3c).

The grains of 2DZIF could be visualized by partial etching of 2DZIF films based on the well documented dissolution of ZIFs in water with reaction condition of 0.5 mM Zn$^{2+}$, 4 mM 2-mIm for 4 min (Fig. 3d). After partial dissolution, the grain shape was triangular with a lateral size of 1-2 $\mu$m (Fig. 3e) consistent with earlier observations of domains in the sub-monolayer film. The three sides of the triangular grains could be assigned to be (110), (110) and (100) lattice planes, respectively, reported to be the minimum surface energy planes for ZIF layers (Zhu et al., 2017, supra). AFM images (Fig. 3f) confirmed that the grains have uniform thickness of ~ ca. 2 nm consistent with the structure of 2DZIF.

The 3.2 Å gap in the 6-MR of 2DZIF is attractive for sieving H$_2$ (kinetic diameter of 2.89 Å) from larger gas

molecules such as $CO_2$ (3.30 Å), $N_2$ (3.64 Å), and $CH_4$ (3.80 Å) (Zhu et al., 2019, RSC Adv. 9, 2339-23399; Yang, et al., 2021, Sci. Bull. 66, 1869-1876).

The 2DZIF film (2DZIF grown on HOPG) was mechanically robust with Young's modulus of 8.1 $\pm$ 2.1 GPa **(Fig. 3h & i)**, comparable to that of the three-dimensional analogs (Tan et al., 2010, PNAS 107, 9938-9943).

**Example 3: Gas performance of 2DZIF films according to the invention**

H2-sieving performance was assayed on 2DZIF films obtained as described in Example 1 using nanoporous graphene (NG) mechanically reinforced with a dense 250-nm-thick poly[1-(trimethylsilyl)propyne] (PTMSP) film where the NG/PTMSP film acts as a 2D substrate **(Fig. 4a)**. The pores in NG were intentionally designed to be large (1.8 $\pm$ 1.2 nm) (He et al., 2019, Energy Environ. Sci., 12, 3305-3312*)* to rule out any molecular sieving from NG and to allow the determination of $H_2$-sieving from the 2DZIF film. The resulting 2DZIF/graphene/PTMSP film was transferred to substrate (macroporous W support with 1-mm²-size testing area) for further characterizations or applications.

The gas separation performance of the membranes was recorded on a homemade permeation setup. The pressure on the feed side was maintained at 2-8 bar and on the permeate side at 1 bar during the measurements. All measurements were done after reaching the steady state with argon as the sweep gas. The membranes were sealed with stainless-steel gasket. The composition of permeate was analysed using an online Hiden Analytical HPR-20 mass spectrometer.

The permeances, $J_i$, of gas *i* was calculated by Eq. S1

$$J_i = X_i/(A \cdot \Delta P_i) \qquad (S1)$$

where $X_i$ is the molar flow rate of component *i* across the membrane area (A) and $\Delta P_i$ is the transmembrane pressure difference for the component *i*. The selectivity $\alpha_{ij}$ of two gases (*i* and *j*, where *i* is the faster permeating gas) was calculated by Eq. S2

$$\alpha_{ij} = J_i/J_j \qquad (S2)$$

The 2DZIF films, resting on the macroporous metal foil support (area of 1 mm²). exhibited a molecular cut-off for molecules larger than $H_2$, indicating that gas transport was controlled by the 6-MR of 2DZIF **(Fig. 4b)**. The $H_2$ permeance was large (>15'000 gas permeation units or GPU; 1 GPU = 3.35 $\times$ 10⁻¹⁰ mol m⁻² s⁻¹ Pa⁻¹) similar to that from the support film (indicating a negligible transport resistance from the 2DZIF layer.

When an equimolar $H_2$:$N_2$ mixture was probed with feed pressure of 2 bar, a $H_2$ permeance of 17300 GPU with a $H_2$/$N_2$ separation factor of 115 could be obtained (**Fig. 4c**). Another membrane when tested under a high-pressure feed (8 bar), exhibited a high $H_2$ flux of 2.8 mol m⁻² s⁻¹ and $H_2$/$N_2$ separation factor of 52. This performance constitutes one of the best combinations of $H_2$ flux and $H_2$/$N_2$ separation factor **(Fig. 4d)** as detailed in **Fig. 4e**, wherein the following references are cited: **12:** Mao et al., 2014, ACS Appl. Mater. Interfaces 6, 4473-4479*;* **13:** Huang et al., 2018, Adv. Mater. Interfaces, 5, 1800287*;* **14:** Zhong et al., 2014, Carbon 72, 242-249*;* **15:** Zhong et al. 2015, J. Mater. Chem. A 3, 15715-15722*;* **16:** Li et al., 2016, Nat. Commun., 7, 11315*;* **17:** Eum et al., 2019, Angew. Chemie. Int. Ed. 131, 16542-16546*;* **18:** De Vos et al., 1998, Science 279, 1710-1711; **19:** Poshusta et al., 1998, Ind. Eng. Chem. Res. 37, 3924-3929*;* **20:** Guo et al., 2020, Angew. Chemie. Int. Ed., 59, 6284-634*;* **21:** Liu et al., 2020, Nat. Commun., 11, 1633*;* **22:** Lei et al., 2021, Nat. Commun., 12, 268*;* **23:** Feng et al., 2020, Angew. Chemie. Int. Ed. 59, 3840-3845*;* Huang et al., 2021, Sci. Adv. 7, eabf0116).

Centimeter-scale 2DZIF membrane could be also prepared, thanks to the highly uniform deposition of 2DZIF films on graphene **(Fig. If and g),** which also presents attractive permselective $H_2$ permeance **(Fig. 4f & g; Table 2)** and $H_2$/$N_2$ selectivity, in agreement with the smaller-area membranes.

**Table 2**

| | $H_2$ permeance (GPU) | $CO_2$ permeance (GPU) | $N_2$ permeance (GPU) | $CH_4$ permeance (GPU) | $H_2$/$CO_2$ | $H_2$/$N_2$ | $H_2$/$CH_4$ |
|---|---|---|---|---|---|---|---|
| NG/Teflon (support film) | 2450 | 2290 | 610 | 390 | 1.1 | 4.0 | 6.3 |

(continued)

| | $H_2$ permeance (GPU) | $CO_2$ permeance (GPU) | $N_2$ permeance (GPU) | $CH_4$ permeance (GPU) | $H_2/CO_2$ | $H_2/N_2$ | $H_2/CH_4$ |
|---|---|---|---|---|---|---|---|
| 2DZIF synthesized on NG/Teflon support film | 2180 | 340 | 110 | 80 | 6.4 | 19.8 | 27.3 |
| Intrinsic performance of the 2DZIF layer* | 19781 | 399 | 134 | 101 | 50 | 148 | 195 |
| *Based on the resistance model as described below. | | | | | | | |

Calculation of intrinsic performance of 2DZIF layer in 1 cm scale membrane:
The resistance ($R_i$) of gas permeance membrane is defined as,

$$R_i = \frac{L}{P_i \times A} = \frac{1}{J_i \times A}$$

Where L is the thickness of membrane, $P_i$ is permeability of the membrane material to gas i, $J_i$ is permeance of the membrane material to gas i, and A is the effective area of membrane.
The 2DZIF membrane is composed of two parts, supportive NG/Teflon layer and selective 2DZIF layer, that means the total resistance ($R_{total}$) can be expressed as a combination of resistance from supportive NG/Teflon layer, $R_{support}$, and selective 2DZIF layer, $R_{2DZIF}$,

$$R_{total} = R_{support} + R_{2DZIF}$$

According to the definition of resistance ($R_i$) of gas permeance membranes, we will have

$$\frac{1}{J_{total}} = \frac{1}{J_{support}} + \frac{1}{J_{2DZIF}}$$

Where $J_{total}$, $J_{support}$ and $J_{ZDZIF}$ are permeance of total membrane, support layer and 2DZIF layer, respectively[2].
Take $H_2$ permeance data from Supplementary Table 4 for example,

$$\frac{1}{2180(GPU)} = \frac{1}{2450(GPU)} + \frac{1}{J_{2DZIF}}$$

We will have the intrinsic $H_2$ permeance of 2DZIF $J_{2DZIF}$ = 19781 (GPU).

**Example 4: Method of preparation of MOF films according to the invention on 2D porous substrates**

In order to support that the method of preparation can be applied to other MOFs and is not limited to ZIFs, a 2D film of UiO-66-NH$_2$ was deposited on HOPG **(Fig. 5)** under the following conditions of 1 mM Zr$^{4+}$, 1 mM BDC-NH$_2$ aqueous solution for 2 min.
SEM image from panel b confirmed its flat and smooth of UiO-66-NH$_2$ thin film and its thickness is 1.8 nm from the result of AFM measurement **(Fig. 5c and 5d).** Finally, its crystallinity was checked by electron diffraction, and two patterns were observed, where grey circles and white circles represent graphene and UiO-66-NH$_2$, respectively **(Fig. 5e and 5f).**
Altogether, those data support that the method of the invention achieves the preparation of MOFs, in particular ZIFs, as macroscopically uniform crystalline 2D films from an ultradilute solution. The 2DZIF film yields exceptional $H_2$-sieving performance, thanks to the ordered 2D structure with a high density of 6-MR with 3.2 Å gap, making such a film the ultimate selective layer for membrane application.

**Example 5: Method of preparation of ZIF films according to the invention on amorphous substrates**

It was surprisingly found that the film crystallinity is determined by the interaction of molecular precursors during curse of the method of preparation according to the invention and that useful ultrathin amorphous films could be obtained by using an amorphous substrate in a method according to the invention.

**a) Providing an amorphous substrate**

A Si/SiO$_2$ wafer with a 300-nm-thick oxide layer was provided as an amorphous substrate. The substrate was used as received.

For electron patterning application, amorphous silicon nitride (SiN) was pre-treated with oxygen plasma for 10 min (29.6 W, 400 mTorr oxygen pressure) in a plasma cleaner (Harrick Plasma) to improve the surface reactivity and the pre-treated SiN layer was provided as an amorphous substrate.

**a) Immersing the supporting substrate in a precursor an ultradilute precursor solution**

The amorphous substrate was then immersed in an ultradilute precursor solution ($\leq$ 2 mM Zn$^{+2}$ and $\leq$ 16 mM 2-methylimidazole (2-mIm), respectively) for a few minutes **(Fig. 6a)**. First, in a petri dish containing 29 ml of Zn(NO$_3$)$_2$ aqueous solution at room temperature the amorphous substrate was partially immersed. Then, 1 ml of 2-mIm aqueous solution was added. After an incubation time of 2-15 minutes, the substrate was removed to stop the reaction. The obtained ZIF films on amorphous substrates are referred to as aZIF.

**Example 6: Electron beam patterning of aZIF films obtained by a method according to the invention**

The aZIF film on the amorphous silicon nitride support obtained as described in Example 5 was subsequently exposed to a direct-write electron beam using 1:1 line- and space-patterns ranging from 10 to 40 nm in line width (or half pitch) using a Thermo Fisher Helios G4 UC Dual Beam microscope operating at 20 kV accelerating voltage and 400 pA beam current. The areal doses were 80 mC/cm$^2$ for all patterns **(Fig. 8a)**.

After exposure and development in water for 24 h and blown dried in a stream of nitrogen gas, it was observed that the irradiated area was preserved while the non-irradiated area was dissolved **(Fig. 8b)**, confirming aZIF as a negative-tone resist. The thickness of the remaining aZIF structure was determined to be ~25 nm by AFM **(Fig. 8c and d)**. The resolution of the resulting pattern, as exemplified by the well-resolved lines at 20 nm half pitch, is comparable to the state-of-the-art metal-containing resists (Oleksak et al., 2014, ACS Appl. Mater. Interfaces, 6, 2917-2921; Xu et al., 2018, Chem. Mater. 30, 4124-4133) which are an emerging class of material that hold promise in extreme ultraviolet lithography and electron beam lithography (Stowers et al., 2009, Microelectron. Eng. 86, 730-733; Luo et al., 2020, RSC Adv. 10, 8385-8395; Manouras et al., 2020, Nanomaterials 10, 1593).

The simple fabrication of ultrathin ZIF films according to the present invention applied to amorphous substrates could accelerate the development of new ZIF-based resist materials for lithographic applications (Gangnaik et al., 2017, Review, Chem. Mater., 29, 1898-1917, Tu et al., 2021, Nat. Mater. 20, 93-99, Ghash et al., 2021, Chem. Mater., 33, 5681-5689; Conrad et al., 2018, Angew. Chem. Int. Ed., 57, 13592-13597).

The ZIF films obtained on the Si/SiO$_2$ wafer substrate as described in Example 5 **(Fig. 6a)** were observed as being macroscopically smooth, continuous, and uniform ZIF films. AFM of one of these films, prepared using 2 mM Zn2$^+$ and 16 mM 2-mIm and growth time of 10 s, confirmed that the film is smooth with thickness near 8 nm **(Fig. 6b and 6c)**. Ellipsometry of several ZIF films on Si/SiO$_2$ wafer, prepared by varying the synthesis time, 10 s -5 min, indicated that the film thickness could be tuned in the range of 8-18 nm **(Fig. 6d)**.

In X-ray diffraction (GIXRD), no diffraction from those ZIF films prepared directly on Si/SiO$_2$ wafer confirmed that that these films were amorphous.

Altogether, those data support that the method of the invention achieves the preparation of ZIFs, as macroscopically uniform amorphous films from an ultradilute solution. on non-epitaxial substrates yields macroscopically smooth amorphous ZIF films, which can be used as negative-tone resists yielding pattern features down to 10 nm.

Those ultrathin amorphous films are promising for advancing the limit of nanoscale patterning.

**Claims**

1. **A method** for the preparation of a metal-organic framework (MOF)coated substrate comprising the steps of:

    **a)** Providing a substrate;
    **b)** providing an ultra-diluted MOF metal precursor solution, wherein said an ultra-diluted MOF metal precursor solution contains $\leq$ 2mM of metal ions and $\leq$ 16 mM organic ligand;
    **c)** immersing the said substrate in the ultra-diluted MOF metal precursor solution for about 2 to about 20 min;
    **d)** removing the obtained the MOF coated substrate from the precursor solution, wherein the MOF coated substrate comprises a MOF layer from about 2 to about 20 nm coated on said substrate.

2. The method of claim 1 wherein the support is a 2D substrate, in particular a 2D porous graphitic substrate.

3. The method of claim 2 wherein the 2D substrate is selected from a HOPG substrate, a graphene/PTMSP substrate or a nanoporous graphene/teflon substrate.

4. The method of claim 1, wherein the porous MOF is a ZIF, in particular a Zn-based MOF.

5. The porous metal-organic framework is a ZIF, in particular a Zn-based MOF.

6. The method of any preceding claim wherein the porous metal-organic framework is a Zr-MOF, in particular UiO-66.

7. The method of any one of claims 1 to 4, wherein the MOF is a ZIF and the ultra-diluted MOF metal precursor solution contains $\leq$ 2 mM of $Zn^{2+}$ and $\leq$ 16 mM 2-methylimidazole (2mIm).

8. The method of any one of claims 1 to 4 and 7, wherein the ultra-diluted MOF metal precursor solution contains from 1 to about 2 mM of $Zn^{2+}$.

9. The method of any one of claims 1 to 4 and 7, wherein the ultra-diluted MOF metal precursor solution contains from about 8 to about 16 mM 2-methylimidazole.

10. The method of any preceding claims wherein the substrate is immersed in the ultra-diluted MOF metal precursor solution from 1 to about 10 minutes (e.g. about 2 to 5 minutes).

11. A graphitic substrate coated with two-dimensional crystalline ZIF (2DZIF) film, wherein the said film's thickness is from about 2 to about 20 nm (e.g. from about 2 to about 18 nm, such as from about 2 to about 10 nm) and the film's pore density from about 10% to about 60%, in particular about 30% to about 60% (e.g. 50%).

12. A gas selective filter for separating $H_2$ and $N_2$ comprising a graphene membrane comprising a graphitic substrate coated with two-dimensional ZIF (2DZIF) film obtained from a method according to anyone of claims 1 to 10.

13. A gas selective filter comprising a membrane comprising a membrane comprising a porous graphitic substrate coated with two-dimensional ZIF (2DZIF) film according to claim 11.

14. Use of a gas selective filter according to claim 12 or 13 for separating $H_2$ and $N_2$.

15. An amorphous substrate coated with an amorphous ZIF (aZIF) film, wherein the said film's thickness is from about 8 nm to about 20 nm (e.g. about 10 to 19 nm).

16. Use of an amorphous porous substrate coated with amorphous ZIF (aZIF) film in an imprinting or lithographic patterning process.

Figure 1

Figure 2

Figure 3

Figure 3 (continued)

Figure 4

| Material | Name | Feed pressure (bar) | Single gas | | | Mixture gas | | | ref |
|---|---|---|---|---|---|---|---|---|---|
| | | | $H_2$ permeance (GPU) | $H_2$ flux (mol·m$^{-2}$·s$^{-1}$) | $H_2/N_2$ | $H_2$ permeance (GPU) | $H_2$ flux (mol·m$^{-2}$·s$^{-1}$) | $H_2/N_2$ | |
| MOF | ZIF-8 | 2 | 6000 | 0.40 | 6.5 | 6000 | 0.40 | 6.5 | 12 |
| | ZIF-8 | 2 | 3015 | 0.20 | 10.9 | - | - | - | 13 |
| | ZIF-L | 1 | 10746 | 0.36 | 6.2 | - | - | - | 14 |
| | ZIF-L | 2 | 582 | 0.04 | 8.1 | 530 | 0.04 | 7.7 | 15 |
| | CuBTC/MIL-100 | 2 | 284 | 0.02 | 240.4 | - | - | - | 16 |
| | Vapor phase ligand treatment ZIF-8 | 2 | 448 | 0.03 | 126 | - | - | - | 17 |
| Silica | Si | 2 | 1493 | 0.10 | 135 | - | - | - | 18 |
| Zeolite | SAPO-34 | 2.3 | 96 | 0.01 | 7.4 | - | - | - | 19 |
| GO | SOD/GO | 2 | 1194 | 0.02 | 40 | - | - | - | 20 |
| | SOD/GO | 1.2 | 3881 | 0.05 | 6.2 | - | - | - | |
| | SOD/GO | 2 | 1194 | 0.02 | 40 | - | - | - | |
| CMP | CMT | 2 | 29786 | 2.00 | 11.3 | - | - | - | 21 |
| | CHFM | 2 | 149 | 0.01 | 829 | - | - | - | 22 |
| HOF | UPC-HOF-6-120 | 2.2 | 1045 | 0.08 | 19.5 | 890 | 0.07 | 17.2 | 23 |
| Graphene | N-SLG | 1.5 | 13731 | 0.69 | 17.7 | - | - | - | 48 |
| ZIF | 2DZIF | 2 | 20280 | 1.36 | 43.1 | 17300 | 1.16 | 117.8 | From the invention |
| | 2DZIF | 2 | 15850 | 1.06 | 49.5 | 9300 | 0.62 | 35.8 | |
| | 2DZIF | 3 | - | - | - | 8680 | 0.87 | 41.3 | |
| | 2DZIF | 4 | - | - | - | 7560 | 1.01 | 47.3 | |
| | 2DZIF | 5 | - | - | - | 7570 | 1.27 | 39.8 | |
| | 2DZIF | 6 | - | - | - | 6920 | 1.39 | 38.4 | |
| | 2DZIF | 7 | - | - | - | 7320 | 1.72 | 43.1 | |
| | 2DZIF | 8 | - | - | - | 10450 | 2.80 | 52.3 | |

GO: graphene oxide, CMP: conjugated microporous polymers, CHFM: carbon hollow fiber membrane, CMT: conjugated microporous thermoset, HOF: hydrogen-bonded organic frameworks.

Figure 4 (continued)

EP 4 368 285 A1

(g)

2DZIF
NG
Teflon
PBI support

(f)

1 cm

Figure 4 (continued)

Figure 5

Figure 6

d

Figure 6 (continued)

Figure 7

Figure 8

Europäisches
Patentamt

European
Patent Office

Office européen
des brevets

# EUROPEAN SEARCH REPORT

Application Number

EP 22 20 7344

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUANGWEI HE ET AL: "Electrophoretic Nuclei Assembly for Crystallization of High-Performance Membranes on Unmodified Supports", ADVANCED FUNCTIONAL MATERIALS, WILEY – V C H VERLAG GMBH & CO. KGAA, DE, vol. 28, no. 20, 12 March 2018 (2018-03-12), page n/a, XP072414956, ISSN: 1616-301X, DOI: 10.1002/ADFM.201707427 | 11-14 | INV. B01J20/32 B01J20/22 B01J20/20 B01D69/10 B01D69/12 B01D61/00 B01D53/22 B01D71/02 |
| Y | * abstract * | 2-10 | |
| A | * figures 1,2,5 * * 1. Introduction; page 2, left-hand column * * 2. Results and Discussion, 2.1.Preparation of Nuclei Films; page 2, right-hand column * * 2.2 ENACT Insights and Optimization; page 2, right-hand column – page 4 * * 4. Experimental Section; page 6, right-hand column – page 7, left-hand column * * 2.5. Gas Separation Performance of the ZIF-8 Membranes; page 5, left-hand column – page 6, left-hand column * | 1 | |

-/--

|  |  |  |
|---|---|---|
| | | TECHNICAL FIELDS SEARCHED (IPC) |
| | | B01J B01D |

The present search report has been drawn up for all claims

| Place of search | Date of completion of the search | Examiner |
|---|---|---|
| Munich | 23 May 2023 | Kaluza, Nicoleta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

Europäisches Patentamt

European Patent Office

Office européen des brevets

# EUROPEAN SEARCH REPORT

Application Number

EP 22 20 7344

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | & He Guangwei ET AL: "Supporting Information: Electrophoretic Nuclei Assembly for Crystallization of High-Performance Membranes on Unmodified Supports", Advanced Functional Materials, 12 March 2018 (2018-03-12), page 1707427, XP093047851, DOI: 10.1002/adfm.201707427 Retrieved from the Internet: URL:https://api.wiley.com/onlinelibrary/tdm/v1/articles/10.1002%2Fadfm.201707427 [retrieved on 2023-05-17] | 11-14 | |
| Y | * tables S1,S3,S4 * | 2-10 | |
| X | WO 2019/186134 A1 (G2O WATER TECH LIMITED [GB]) 3 October 2019 (2019-10-03) | 1 | |
| Y | * claims 2,4-7,34-43 * <br> * paragraph [0127] – paragraph [0128] * <br> * paragraph [0036] – paragraph [0066] * <br> * paragraph [0080] – paragraph [0081] * <br> * paragraph [0093] – paragraph [0098] * <br> * paragraph [0148] * | 2-10 | TECHNICAL FIELDS SEARCHED (IPC) |
| A | BABU DEEPU J. ET AL: "Crystal Engineering of Metal-Organic Framework Thin Films for Gas Separations", ACS SUSTAINABLE CHEMISTRY & ENGINEERING, vol. 7, no. 1, 6 December 2018 (2018-12-06), pages 49-69, XP093048713, US ISSN: 2168-0485, DOI: 10.1021/acssuschemeng.8b05409 * the whole document * | 1-14 | |

The present search report has been drawn up for all claims

| Place of search | Date of completion of the search | Examiner |
|---|---|---|
| Munich | 23 May 2023 | Kaluza, Nicoleta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

2, 3, 11-14(completely); 1, 4-10(partially)

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**

**SHEET B**

The Search Division considers that the present European patent application does not comply with the requirements of unity of invention and relates to several inventions or groups of inventions, namely:

1. claims: 2, 3, 11-14(completely); 1, 4-10(partially)

   Group 1: a method for preparing a crystalline MOF film which may be ZIF on a 2D porous graphitic substrate, wherein the substrate and the coating are crystalline, the product obtained and the use of the the graphitic substrate coated with a 2D ZIF to obtained a membrane which may be used in filters for gas separation

   ---

2. claims: 15, 16(completely); 1, 4-10(partially)

   Group 2: a method for preparing a an amorphous MOF film which may be ZIF on an amorphous substrate and the the obtained amorphous substrate coated with the amorphous ZIF is used in an imprinting or lithographic patterning process

   ---

## ANNEX TO THE EUROPEAN SEARCH REPORT
## ON EUROPEAN PATENT APPLICATION NO.

EP 22 20 7344

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2023

| Patent document cited in search report | | Publication date | Patent family member(s) | | Publication date |
|---|---|---|---|---|---|
| WO 2019186134 | A1 | 03-10-2019 | EP | 3774001 A1 | 17-02-2021 |
| | | | US | 2021016232 A1 | 21-01-2021 |
| | | | WO | 2019186134 A1 | 03-10-2019 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BANERJEE et al.** *Science,* 2008, vol. 319, 939-943
- **GUILLERM et al.** *Chem. Soc. Rev.,* 2014, vol. 43, 6141-6172
- **ZHOU et al.** *Sci. Adv.,* 2018, vol. 4, eaau1393
- **MA et al.** *Science,* 2018, vol. 361, 1008-1011
- **STASSEN et al.** *CrystEngComm,* 2013, vol. 15, 9308-9311
- **MIAO et al.** *Nat. Commun.,* 2022, vol. 13, 420
- **LU et al.** *J. Am. Chem. Soc.,* 2010, vol. 132, 7832-7833
- **EPSZTEIN et al.** *Nat. Nanotechnol.,* 2020, vol. 15, 426-436
- **MOGGACH et al.** *Angew. Chem. Int. Ed.,* 2009, vol. 48, 7087-7089
- **KNEBEL et al.** *Science,* 2017, vol. 358, 347-351
- **BENNETT et al.** *Nat. Chem.,* 2017, vol. 9, 11-16
- **BABU et al.** *Adv. Mater.,* 2019, vol. 31, 1900855
- **PARK et al.** *Proc. Natl. Acad. Sci. U. S. A.,* 2006, vol. 103, 10186-10191
- **QIAN et al.** *Chem. Rev.,* 2020, vol. 120, 8161-8266
- **ESSEN et al.** *Separation and Purification Technology,* 2020, vol. 260 (1), 118103
- **BENNETT et al.** *Nat. Rev. Mater.,* 2018, vol. 3, 431-440
- **CRIVELLO et al.** *Mater. Horiz.,* 2021, vol. 8, 168-178
- **ZHANG et al.** *ACS Omega,* 2022, vol. 7 (21), 17765-17773
- **BAI et al.** *ACS Appl. Mater. Interfaces,* 2018, vol. 10, 25960-25966
- **GASCON et al.** *Angew. Chem. Int. Ed.,* 2010, vol. 49, 1530-1532
- **SUN et al.** *Environ. Sci.: Nano,* 2022
- **CHEN et al.** *Chem. Commun.,* 2013, vol. 49, 9500-9502
- **PENG et al.** *Science,* 2014, vol. 346, 1356-1359
- **PENG et al.** *Angew. Chem.,* 2017, vol. 129, 9889-9893
- **HE et al.** *Adv. Funct. Mater.,* 2018, vol. 28, 1707427
- **WEI et al.** *Adv. Funct. Mater.,* 2020, vol. 30, 1907089
- **SEIDI et al.** *Materials (Basel).,* 2020, vol. 13 (12), 2881
- **FURUKAWA et al.** *Science,* 2013, vol. 341, 1230444
- **HUANG et al.** *Sci. Adv.,* 2021, vol. 7, eabf0116
- **WANG et al.** *ACS Appl. Nano Mater.,* 2020, vol. 3, 3839-3846
- **KIM et al.** *J. Membr. Sci.,* 2018, vol. 549, 260-266
- **ZHANG et al.** *New J. Chem.,* 2018, vol. 42, 6719-6726
- **WANG et al.** *CrystEngComm,* 2019, vol. 21, 6536-6544
- **HAN et al.** *J. Mater. Chem.,* 2020, vol. 8, 25028-25034
- **ZHU et al.** *RSC Adv.,* 2019, vol. 9, 23390-23399
- **YUAN et al.** *Adv. Mater.,* 2019, vol. 31, 1807161
- **PAN et al.** *Chem. Commun.,* 2011, vol. 47, 2071-2073
- **GIANNOZZI et al.** *J. Phys. Condens. Matter,* 2009, vol. 21, 390052
- **GIANNOZZI et al.** *J. Phys. Condens. Matter,* 2017, vol. 29, 465901
- **LEJAEGHERE et al.** *Science,* 2016, vol. 351, 6280
- **PRANDINI et al.** *Comput. Mater.,* 2018, vol. 4, 72
- **PERDEW et al.** *Phys. Rev. Lett.,* 1996, vol. 77, 3865-3868
- **ZHU et al.** *Nat. Mater.,* 2017, vol. 16, 532-536
- **ZHU et al.** *RSC Adv.,* 2019, vol. 9, 2339-23399
- **YANG et al.** *Sci. Bull.,* 2021, vol. 66, 1869-1876
- **TAN et al.** *PNAS,* 2010, vol. 107, 9938-9943
- **HE et al.** *Energy Environ. Sci.,* 2019, vol. 12, 3305-3312
- **MAO et al.** *ACS Appl. Mater. Interfaces,* 2014, vol. 6, 4473-4479
- **HUANG et al.** *Adv. Mater. Interfaces,* 2018, vol. 5, 1800287
- **ZHONG et al.** *Carbon,* 2014, vol. 72, 242-249
- **ZHONG et al.** *J. Mater. Chem. A,* 2015, vol. 3, 15715-15722
- **LI et al.** *Nat. Commun.,* 2016, vol. 7, 11315
- **EUM et al.** *Angew. Chemie. Int. Ed,* 2019, vol. 131, 16542-16546

- **DE VOS et al.** *Science,* 1998, vol. 279, 1710-1711
- **POSHUSTA et al.** *Ind. Eng. Chem. Res.,* 1998, vol. 37, 3924-3929
- **GUO et al.** *Angew. Chemie. Int. Ed.,* 2020, vol. 59, 6284-634
- **LIU et al.** *Nat. Commun.,* 2020, vol. 11, 1633
- **LEI et al.** *Nat. Commun.,* 2021, vol. 12, 268
- **FENG et al.** *Angew. Chemie. Int. Ed.,* 2020, vol. 59, 3840-3845
- **OLEKSAK et al.** *ACS Appl. Mater. Interfaces,* 2014, vol. 6, 2917-2921
- **XU et al.** *Chem. Mater.,* 2018, vol. 30, 4124-4133
- **STOWERS et al.** *Microelectron. Eng.,* 2009, vol. 86, 730-733
- **LUO et al.** *RSC Adv.,* 2020, vol. 10, 8385-8395
- **MANOURAS et al.** *Nanomaterials,* 2020, vol. 10, 1593
- **GANGNAIK et al.** *Review, Chem. Mater.,* 2017, vol. 29, 1898-1917
- **TU et al.** *Nat. Mater.,* 2021, vol. 20, 93-99
- **GHASH et al.** *Chem. Mater.,* 2021, vol. 33, 5681-5689
- **CONRAD et al.** *Angew. Chem. Int. Ed.,* 2018, vol. 57, 13592-13597